# FASCICULE DE BREVET EUROPEEN

(11) **EP 3 383 530 B1**
(45) Date de publication et mention de la délivrance du brevet: **13.05.2020**
(21) Numéro de dépôt: 16806025.9
(22) Date de dépôt: 30.11.2016
(51) Int. Cl.: B01J 31/22, C08F 210/02, C08F 236/06

(54) **SYSTEME CATALYTIQUE COMPRENANT UN METALLOCENE DE TERRE RARE**
KATALYTISCHES SYSTEM MIT EINEM SELTENERDMETALLOCEN
CATALYTIC SYSTEM COMPRISING A RARE-EARTH METALLOCENE

(30) Priorité: 01.12.2015 FR 1561629
(43) Date de publication de la demande: 10.10.2018
(73) Titulaire: Compagnie Générale des Etablissements Michelin, 63000 Clermont-Ferrand (FR); Centre National de la Recherche Scientifique, 75794 Paris Cedex 16 (FR); CPE Lyon Formation Continue et Recherche, 69622 Villeurbanne Cedex (FR)
(72) Inventeur: THUILLIEZ, Julien, 63040 Clermont-Ferrand Cedex 9 (FR); BOISSON, Christophe, 01390 Tramoyes (FR)
(74) Mandataire: Gandon-Pain, Sylvie
(86) Numéro de dépôt international: PCT/EP2016/079200
(87) Numéro de publication internationale: WO 2017/093278

(56) Documents cités:
- EP-A1- 1 092 731
- WO-A1-01/72852
- WO-A1-2004/035639
- WO-A2-2007/054223
- JAE-SANG RYU ET AL: "Organolathanide-Catalyzed Regioselective Intermolecular Hydroamination of Alkenes, Alkynes, Vinylarenes, Di- and Trivinylarenes, and Methylenecyclopropanes. Scope and Mechanistic Comparison to Intramolecular Cyclohydroaminations", JOURNAL OF THE AMERICAN CHEMICAL SOCIETY, vol. 125, no. 41, 1 octobre 2003 (2003-10-01), pages 12584-12605, XP055280082, US ISSN: 0002-7863, DOI: 10.1021/ja035867m
- MIN HYUNG LEE ET AL: "The First Fluorenyl ansa -Yttrocene Complexes: Synthesis, Structures, and Polymerization of Methyl Methacrylate", ORGANOMETALLICS, vol. 18, no. 24, 1 novembre 1999 (1999-11-01), pages 5124-5129, XP055280251, US ISSN: 0276-7333, DOI: 10.1021/om990471y

## Description

La présente invention concerne un système catalytique comprenant un métallocène de terre rare ponté utilisable pour la copolymérisation de monooléfines hydrocarbonées telles que l'éthylène et de diène conjugué tel que le 1,3-butadiène, l'isoprène ou leur mélange.

Pour la copolymérisation de l'éthylène et d'un diène conjugué, il est connu d'utiliser des systèmes catalytiques à base de complexes métallocènes de terre rare.

A cette fin, le métallocène décrit dans la demande de brevet EP 1 092 731 répond à l'une des formules génériques suivantes A ou B : 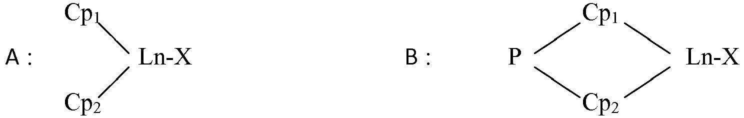
où Ln représente un métal d'un lanthanide dont le numéro atomique peut aller de 57 à 71,
où X représente un halogène pouvant être le chlore, le fluor, le brome ou l'iode,
où Cp₁ et Cp₂ comprennent chacun un, groupe cyclopentadiényle ou fluorényle qui est substitué ou non et où P est un pont répondant à la formule MR₁R₂, où M est un élément de la colonne IVA de la classification périodique de Mendeleev, et où R₁ et R₂ représentent un groupe alkyle comprenant de 1 à 20 atomes de carbone.

Le métallocène décrit dans la demande de brevet WO 2004035639 au nom des Demanderesses est représenté par l'une ou l'autre des formules suivantes : 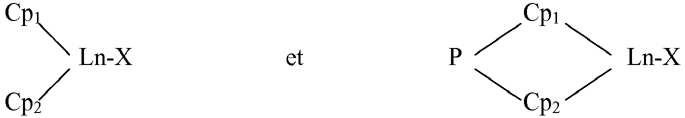
où Ln représente un métal d'un lanthanide dont le numéro atomique peut aller de 57 à 71,
où X représente un halogène pouvant être le chlore, le fluor, le brome ou l'iode,
où, dans la première formule, sont reliées audit métal Ln deux molécules de ligands Cp₁ et Cp₂ identiques ou différentes, constituées chacune d'un groupe fluorényle qui est substitué ou non, et
où, dans la seconde formule, est reliée audit métal Ln, une molécule de ligand constituée de deux groupes fluorényle Cp₁ et Cp₂ identiques ou différents qui sont substitués ou non et qui sont reliés entre eux par un pont P répondant à la formule MR₁R₂, où M est un élément de la colonne IVA de la classification périodique de Mendeleev, et où R₁ et R₂ représentent un groupe alkyle comprenant de 1 à 20 atomes de carbone.

Le métallocène décrit dans la demande de brevet WO 2007054224 au nom des Demanderesses répond à l'une ou l'autre des deux formules suivantes A et B : 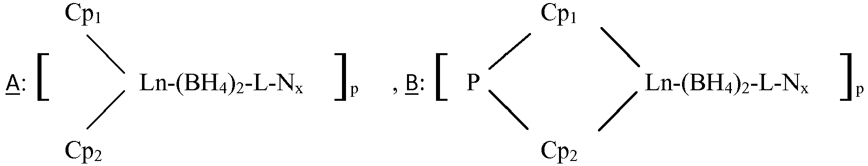
où Ln représente ledit lanthanide dont le numéro atomique est compris entre 57 et 71, inclusivement,
où, dans la formule A, sont reliées au lanthanide Ln deux molécules de ligands Cp₁ et Cp₂ identiques ou différentes, constituées chacune d'un groupe fluorényle qui est substitué ou non,
où, dans la formule B, est reliée au lanthanide Ln une molécule de ligand, constituée de deux groupes fluorényle Cp₁ et Cp₂ identiques ou différents qui sont substitués ou non et qui sont reliés entre eux par un pont P répondant à la formule MR₁R₂, où M est un élément de la colonne IVA de la classification de Mendeleev, et où R₁ et R₂, identiques ou différents, représentent un groupe alkyle comprenant de 1 à 20 atomes de carbone,
où L représente un métal alcalin choisi dans le groupe constitué par le lithium, le sodium et le potassium,
où N représente une molécule d'un solvant complexant, tel qu'un éther,
où x est un nombre entier ou non qui est supérieur à 0, et où
p est un nombre entier égal à 1 ou 2.
Le complexe B est de préférence le complexe B' constitué de deux ligands fluorényle.

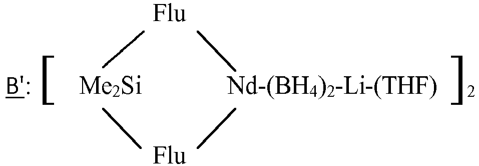

Le métallocène décrit dans la demande de brevet WO 2007054223 répond à l'une ou l'autre des deux formules suivantes C et D : 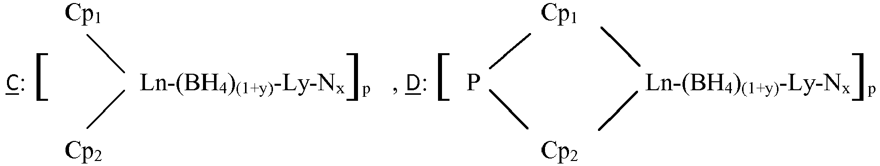
où Ln représente ledit lanthanide dont le numéro atomique est compris entre 57 et 71, inclusivement,
où, dans la formule A, lorsque y est égal ou supérieur à 1, sont reliés au lanthanide Ln deux ligands Cp₁ et Cp₂ identiques ou différents, soit constitués chacun d'un groupe cyclopentadiényle, soit constitués d'un groupe cyclopentadiényle ou fluorényle, substitués ou non, et lorsque y est égal à 0, les deux ligands Cp₁ et Cp₂ sont respectivement constitués d'un groupe cyclopentadiényle et d'un groupe fluorényle, substitué ou non,
où, dans la formule B, lorsque y est égal à 0, sont reliés au lanthanide Ln deux ligands Cp₁ et Cp₂, identiques ou différents, constitués chacun par un groupe choisi parmi les groupes cyclopentadiényle et fluorényle, substitués ou non et qui sont reliés entre eux par un pont P répondant à la formule MR₁R₂, où M est un élément de la colonne IVA de la classification de Mendeleev, et où R₁ et R₂, identiques ou différents, représentent un groupe alkyle comprenant de 1 à 20 atomes de carbone,
où L représente un métal alcalin choisi dans le groupe constitué par le lithium, le sodium et le potassium,
où N représente une molécule d'un solvant complexant, tel qu'un éther,
où x est un nombre entier ou non qui est supérieur à 0,
où y est un nombre entier qui est égal ou supérieur à 0, et où
p est un nombre entier égal à 1 ou 2.

D'autres systèmes catalytiques à base de complexes mono-cyclopentadiényle de type borohydrure de lanthanide sont notamment connus dans la littérature pour l'homopolymérisation de dioléfines.

On peut par exemple citer l'article de D. Barbier-Baudry, O. Blacque, A. Hafid, A. Nyassi, H. Sitzmann, M. Visseaux, European Journal of Inorganic Chemistry 2000, 2333-2336, qui mentionne un complexe de formule (C₅H(*i*Pr)₄)Ln(BH₄)₂(THF) incluant un ligand mono-cyclopentadiényle substitué par un groupe iso-propyle (*i*Pr), où THF est le tétrahydrofuranne, pour l'homopolymérisation de l'isoprène ou du styrène après alkylation par un co-catalyseur de type organolithien.

Plus récemment, l'article de F. Bonnet, M. Visseaux, A. Pereira, D. Barbier-Baudry, Macromolecules 2005, 38, 3162-3169 a divulgué l'utilisation d'un complexe similaire de formule (C₅Me₄(*n*Pr))Nd(BH₄)₂(THF)₂ incluant un ligand mono-cyclopentadiényle penta-substitué, où nPr est un groupe n-propyle, pour la polymérisation stéréospécifique 1,4-trans de l'isoprène après alkylation par un co-catalyseur de type dialkylmagnésien.

Le document de brevet chinois CN 1 286 256 divulgue, à titre de catalyseur de polymérisation pour la synthèse de polyméthacrylates, un complexe métallocène borohydrure d'un lanthanide comportant une molécule de ligand constituée d'un groupe fluorényle répondant à la formule suivante :

{[(X₁)₂(R₇)(C₅R₁R₂R₃R₄)(C₁₃H₆R₅R₆)]MX₂(L)ₙ}ₘ,

où :
X₁ représente un groupe alkyle possédant de 1 à 4 C ou un groupe phényle,
X₂ = représente Cl, BH₄, H, un groupe alkyle possédant de 1 à 4 atome de carbone N[Si(CH₃)₃]₂, CH₂[Si(CH₃)₃] ou du tétrahydrofuranne,
R₁, R₃, R₄ représente H ou le radical CH₃,
R₂ représente H,
R₅, R₆ représentent H, un groupe alkyle possédant de 1 à 4 atomes de carbone ou Si(CH₃)₃,
R₇ représente Si, C, Ge ou Sn,
M représente un lanthanide, le yttrium ou le scandium,
L représente Si(CH₃)₃, Li(THF)₄, [éther couronne Y] ou [éther couronne Y]-2,4-époxy hexacycle,
n représente 0 ou 1 et m = 1 ou 2 (si m = 2, n = 0),
Y est un métal monovalent.

Une autre voie de recherche récente a concerné des complexes métallocènes borohydrures de lanthanides incluant un ligand à base de deux groupes cyclopentadiényle. On peut par exemple citer les travaux de S. M. Cendrowski-Guillaume et al., Organometallics 2000, 19, 5654-5660 et Macromolecules 2003, 36, 54-60, qui ont divulgué l'utilisation d'un tel complexe métallocène, de formule (C₅Me₅)₂Sm(BH₄)(THF), où Me est un groupe méthyle et ou Sm est le samarium, pour catalyser spécifiquement la polymérisation de l'ε-caprolactone par ouverture de cycles.

On peut également citer les travaux de M. Visseaux et al., Journal of Organometallic Chemistry, 691, (2006), pages 86-92, qui ont divulgué que le métallocène Cp*₂Nd(BH₄)(THF), avec Cp* représentant C₅Me₅, lorsqu'il est utilisé en association avec du butyléthylmagnésium, même en présence d'un important excès de THF, constitue un catalyseur très actif de l'éthylène et permet en présence d'une quantité stœchiométrique de butyléthylmagnésium la polymérisation stéréospécifique 1,4-trans de l'isoprène.

Plus récemment, dans les demandes de brevet EP 2 017 280 et EP 2 463 313 sont divulgués des hémi-métallocènes ou des métallocènes de lanthanides non pontés utilisables pour la copolymérisation des diènes avec des monomères vinyliques, tels que le styrène ou les oléfines. Les structures de ces composés font intervenir des ligands « indène », les catalyseurs font intervenir un système d'activation bi-composant constitué d'une paire d'ions et d'un alkylaluminium. Les copolymères de butadiène et d'éthylène décrits dans ces demandes présentent des faibles teneurs en éthylène, et les motifs butadiène sont essentiellement sous forme 1,4-cis. Les structures des hémi-métallocènes ou des métallocènes sont les suivantes, respectivement E1, E2 et E3 : 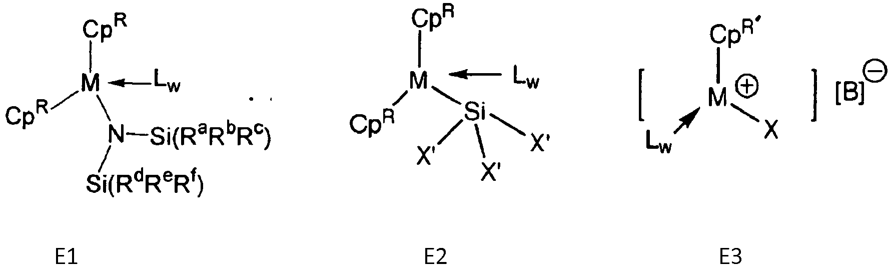
Pour la structure E1, M représente un métal de lanthanide Ln, ou Sc ou Y ; Cp^{R} représente un groupement indényle substitué ou non ; R^{a} - R^{f} représente H ou un groupe alkyle de 1 à 3 atomes de carbone ; L représente une base de Lewis neutre, w un nombre entier allant de 0 à 3.
Pour la structure E2, M représente un métal de lanthanide Ln, Sc ou Y ; X' représente un atome d'hydrogène, d'halogène, un groupe alkoxyde, thiolate, amidure, silyle ou hydrocarboné de 1 à 20 atomes de carbone ; Cp^{R} représente un groupe indényle substitué ou non ; L représente une base de Lewis neutre ; w un nombre entier allant de 0 à 3.
Pour la structure E3, M représente un métal de lanthanide Ln, Sc ou Y ; Cp^{R'} représente un groupe cyclopentadiényle, indényle , fluorényle ; L représente une base de Lewis neutre ; [B]⁻ représente un anion non coordiné, X représente un atome d'hydrogène, d'halogène, un groupe alkoxyde, thiolate, amidure, silyle ou hydrocarboné de 1 à 20 atomes de carbone ; w un nombre entier allant de 0 à 3.

A ce jour, il n'est pas connu de systèmes catalytiques comprenant un métallocène ponté de terre rare permettant la synthèse de copolymère d'éthylène et de 1,3-butadiène comportant des motifs cycliques à 6 atomes de carbone, avec une insertion du monomère butadiène dans le copolymère sous la forme du motif 1,4-trans qui représente plus de 50% en mole des motifs vinyle (1,2), 1,4 et cyclique.

Les Demanderesses poursuivant leur effort dans le développement de systèmes catalytiques pour la copolymérisation de monooléfines hydrocarbonées, telles que l'éthylène ou les α-monooléfines, et de diène conjugué, tel que le 1,3-butadiène, ont découvert un nouveau système catalytique comprenant un catalyseur métallocène ponté et un co-catalyseur, composé organométallique et conduisant à la synthèse de copolymère d'éthylène et de 1,3-butadiène comportant des motifs cycliques à 6 atomes de carbone, avec une insertion du monomère butadiène dans le copolymère sous la forme du motif 1,4-trans qui représente plus de 50% en mole des motifs vinyle (1,2), 1,4 et cyclique.

Ainsi, un premier objet de l'invention est un système catalytique à base au moins :
- d'un métallocène de formule (I)
- d'un composé organométallique à titre de co-catalyseur choisi dans le groupe constitué par les alkyl magnésiums, les alkyl lithiums, les réactifs de Grignard et les mélanges d'alkyl lithiums et d'alkyl aluminiums,

   [{P(Cp¹)(Cp²)MetG(L)ₓ}ₚ] (I)

   - Met étant un atome d'une terre rare,
   - le symbole G représentant un atome d'halogène choisi parmi par le chlore, l'iode et le brome, ou un ligand monovalent choisi parmi le groupe borohydrure BH₄, les groupes amidures, les groupes alkyles et les groupes silylalkyles,
   - L représentant une molécule d'un solvant complexant,
   - x, nombre entier ou non, étant supérieur ou égal à 0
   - p, nombre entier, étant égal à 1 ou 2,
   - Cp¹ et Cp₂, identiques ou différents, étant choisis dans le groupe constitué par les groupes cyclopentadiényles substitués au moins en position 2 et 5, les groupes fluorényles substitués, les groupes fluorényles non substitués et les groupes indényles substitués au moins en position 2,
   - les substituants en position 2 et 5 des groupes cyclopentadiényles et le substituant en position 2 des groupes indényles étant alkyles ou aryles,
   - P étant un groupe pontant Cp¹ et Cp₂, et répondant à la formule MR₁R₂, avec M représentant un atome de Si ou de C, et avec R1 et R2, identiques ou différents, représentant un groupe alkyle,
   - à la condition que si Cp¹ est un groupe fluorényle non substitué, Cp² est différent d'un groupe fluorényle non substitué, de préférence différent d'un groupe fluorényle non substitué et d'un groupe fluorényle substitué.

Un autre objet de l'invention est un procédé de préparation d'un copolymère qui comprend la copolymérisation d'un mélange de monomères d'éthylène et d'un diène conjugué en présence du système catalytique conforme à l'invention.

### I. DESCRIPTION DETAILLEE DE L'INVENTION

Par l'expression « à base de » utilisée pour définir les constituants du système catalytique, on entend le mélange de ces constituants, ou le produit de la réaction d'une partie ou de la totalité de ces constituants entre eux.

Le métallocène, l'un des constituants essentiels du système catalytique conforme à l'invention, a pour caractéristique essentielle de répondre à la formule (I)

[{P(Cp¹)(Cp²)MetG(L)ₓ}ₚ] (I)

- Met étant un atome d'une terre rare,
- le symbole G représentant un atome d'halogène choisi parmi par le chlore, l'iode et le brome, ou un ligand monovalent choisi parmi le groupe borohydrure BH₄, les groupes amidures, les groupes alkyles et les groupes silylalkyles,
- L représentant une molécule d'un solvant complexant,
- x, nombre entier ou non, étant supérieur ou égal à 0
- p, nombre entier, étant égal à 1 ou 2,
- Cp¹ et Cp², identiques ou différents, étant choisis dans le groupe constitué par les groupes cyclopentadiényles substitués au moins en position 2 et 5, les groupes fluorényles substitués, le groupe fluorényle non substitué et les groupes indényles substitués au moins en position 2,
- les substituants en position 2 et 5 des groupes cyclopentadiényles et le substituant en position 2 des groupes indényles étant alkyles ou aryles
- P étant un groupe pontant Cp¹ et Cp², et répondant à la formule MR¹R², avec M représentant un atome de Si ou de C, et avec R¹ et R², identiques ou différents, représentant un groupe alkyle,
- à la condition que si Cp¹ est un groupe fluorényle non substitué, Cp² est différent d'un groupe fluorényle non substitué, de préférence différent d'un groupe fluorényle non substitué et d'un groupe fluorényle substitué.

Dans la présente demande, on entend par métallocène un complexe organométallique dont le métal, en l'espèce une terre rare, est lié à une molécule de ligand constitué de deux groupes Cp¹ et Cp² reliés entre eux par un pont P, lesquels Cp¹, Cp² et P sont tels que définis selon l'un quelconque des modes de réalisation de l'invention. On rappelle que les terres rares sont des métaux et désignent les éléments scandium, yttrium et les lanthanides dont le numéro atomique varie de 57 à 71.

Dans la formule (I), l'atome Met est relié à une molécule de ligand constitué des deux groupes Cp¹ et Cp² reliés entre eux par le pont P. De préférence, les groupes Cp¹ et Cp² contiennent au moins 9 atomes de carbone.

A titre de groupes cyclopentadiényles, fluorényles et indényles substitués utiles aux besoins de l'invention, on peut citer ceux substitués par des radicaux alkyles ayant de préférence 1 à 6 atomes de carbone tel que le méthyle ou par des radicaux aryles ayant de préférence 6 à 12 atomes de carbone tel que le phényle. Le choix des radicaux est aussi orienté par l'accessibilité aux molécules correspondantes que sont les cyclopentadiènes, les fluorènes et indènes substitués, parce que ces derniers sont disponibles commercialement ou facilement synthétisables.

Dans la présente demande, dans le cas du groupe cyclopentadiényle, la position 2 (ou 5) désigne la position de l'atome de carbone qui est adjacent à l'atome de carbone auquel est attaché le pont P comme cela est représenté dans le schéma ci-après.

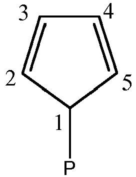

A titre de groupe cyclopentadiényle substitué au moins en position 2 et 5, on peut citer plus particulièrement le groupe 2,3,4,5-tétraméthylcyclopentadiényle, également appelé tétraméthylcyclopentadiényle.

Dans le cas du groupe indényle, la position 2 désigne la position de l'atome de carbone qui est adjacent à l'atome de carbone auquel est attaché le pont P comme cela est représenté dans le schéma ci-après.

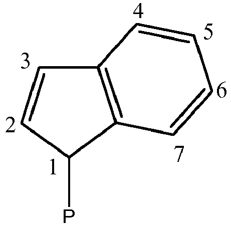

A titre de groupes indényles substitués au moins en position 2, on peut citer plus particulièrement le 2-méthylindényle, le 2-phénylindényle.

A titre de groupes fluorényles substitués, on peut citer plus particulièrement les groupes 2,7-ditertiobutyle-fluorényle et 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

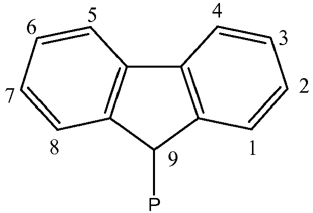

Selon un mode réalisation de l'invention, Cp¹ représente un groupe indényle substitué au moins en position 2, de préférence par un méthyle ou un phényle tel que 2-méthylindényle, le 2-phénylindényle
Selon un autre mode réalisation de l'invention, Cp¹ représente un groupe cyclopentadiényle substitué au moins en position 2 et 5, de préférence par un méthyle tel que le tétraméthylcyclopentadiényle.

Lorsque Cp¹ représente un groupe fluorényle non substitué, il est rappelé que selon l'invention Cp² est différent d'un groupe fluorényle non substitué. En d'autre terme, Cp² ne représente pas le groupe fluorényle de formule C₁₃H₈. Mieux lorsque Cp¹ représente un groupe fluorényle non substitué, Cp² ne peut être ni un groupe fluorényle non substitué, ni un groupe fluorényle substitué.

Selon les modes réalisation particulier de l'invention dans lesquels Cp¹ représente un groupe cyclopentadiényle substitué au moins en position 2 et 5 tel que le tétraméthylcyclopentadiényle ou bien un groupe indényle substitué au moins en position 2 tel que 2-méthylindényle, le 2-phénylindényle, Cp² représente de préférence un groupe fluorényle substitué ou non substitué, de manière plus préférentielle non substitué.

Selon un autre mode de réalisation de l'invention, Cp¹ et Cp², identiques ou différents, représentent chacun un groupe indényle substitué au moins en position 2, de préférence par un méthyle ou le phényle tel que le 2-méthylindényle ou le 2-phénylindényle, de manière plus préférentielle par un méthyle tel que le 2-méthylindényle.

Les groupes amidures utiles en tant que ligand monovalent peuvent être de formule N(SiR³R⁴R⁵) avec R³, R⁴ et R⁵, identiques ou différents, représentant un alkyle ayant de préférence 1 à 6 atomes de carbone. On peut citer tout particulièrement le groupe amidure N(SiMe₃)₂.

A titre de groupes alkyles utiles en tant que ligand monovalent, on peut citer ceux ayant 1 à 6 atomes de carbone, en particulier le groupe méthyle.

Les groupes silylalkyles utiles en tant que ligand monovalent peuvent être de formule C(R⁶)ₙ(SiR⁷R⁸R⁹)₍₃₋ₙ₎ avec R⁶ représentant un atome d'hydrogène ou un groupe alkyle, avec R⁷, R⁸ et R⁹, identiques ou différents, représentant un alkyle ayant de préférence 1 à 6 atomes de carbone, tel que méthyle et avec n allant de 1 à 2. On peut citer tout particulièrement les groupes silylalkyles CH(SiMe₃)₂ ou CH₂SiMe₃.

A titre de solvant complexant, on peut citer les éthers, de préférence le diéthyléther et le tétrahydrofuranne, de manière plus préférentielle le tétrahydrofuranne.

A titre de groupes alkyles R¹ et R² constituant le pont P, on peut citer ceux contenant 1 à 20 atomes de carbone. Conviennent tout particulièrement les ponts CR¹R² ou SiR¹R² dans lesquels les groupes alkyles R¹ et R² sont identiques, de préférence méthyle.

Selon un mode de réalisation préférentiel de l'invention, le symbole G représente de préférence Cl ou BH₄.

Selon un autre mode de réalisation préférentiel de l'invention, le symbole Met représente un atome de lanthanide dont le numéro atomique va de 57 à 71, de préférence un atome de néodyme (Nd).

Selon encore un autre mode de réalisation préférentiel de l'invention, x est égal à 0 ou 1.

Le métallocène peut se trouver sous la forme de poudre cristallisée on non, ou encore sous la forme de monocristaux. Le métallocène peut se présenter sous une forme monomère ou dimère, ces formes dépendant du mode de préparation du métallocène. Le métallocène peut être préparé de façon traditionnelle par un procédé analogue à celui décrit dans les documents EP 1 092 731, WO 2007054223 et WO 2007054224, notamment par réaction dans des conditions inertes et anhydres du sel d'un métal alcalin du ligand avec un sel de terre rare comme un halogénure ou un borohydrure de terre rare, dans un solvant adapté, tel un éther, comme le diéthyléther ou le tétrahydrofuranne ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

De préférence, le métallocène est de formule A1, A2 ou A3, dans lesquelles le symbole 2-Me-Ind représente le groupe indényle substitué en position 2 par un méthyle; C₅Me₄ représente le groupe tétraméthylcyclopentadiényle ; le symbole Flu représentant le groupe fluorényle C₁₃H₈, p étant égal à 1 ou 2.

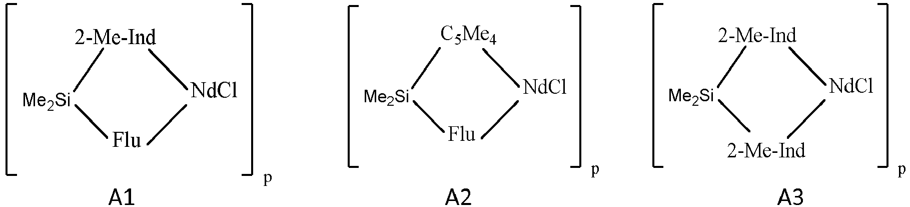

L'autre constituant essentiel du système catalytique conforme à l'invention est le co-catalyseur, un composé organométallique choisi dans le groupe constitué par les alkyl magnésiums, les alkyl lithiums, les réactifs de Grignard et les mélanges d'alkyl lithiums et d'alkyl aluminiums.

Le co-catalyseur est de préférence un alkyl magnésium, de manière plus préférentielle le butyloctylmagnésium.

Selon l'un quelconque des modes de réalisation de l'invention, le rapport molaire du co-catalyseur sur le métal Met est de préférence compris dans un domaine allant de 1 à 100, de manière plus préférentielle est supérieur ou égal à 1 et inférieur à 10. La plage de valeurs allant de 1 à moins de 10 est notamment plus favorable pour l'obtention de copolymères de masses molaires élevées.

Typiquement, le système catalytique est préparé par réaction du métallocène avec le co-catalyseur. Cette étape correspond à l'activation, communément aussi appelée alkylation, du métallocène. Généralement, l'activation du métallocène a lieu en présence d'un solvant hydrocarboné, aliphatique ou aromatique. C'est pourquoi, le système catalytique comprend préférentiellement un solvant hydrocarboné, aliphatique tel que le cyclohexane ou le méthylcyclohexane, ou aromatique tel que le toluène. L'activation a généralement lieu à une température allant de 20 à 80°C, pendant une durée comprise entre 5 et 60 minutes.

Comme toute synthèse faite en présence de composé organométallique, la préparation du système catalytique a lieu dans des conditions anhydres sous atmosphère inerte. Typiquement, elle est conduite à partir de composés anhydres, y compris les solvants, et sous azote ou argon anhydre, de préférence sous agitation.

Selon un mode de réalisation particulier de l'invention, l'activation du métallocène est réalisée in situ dans le milieu de polymérisation qui contient le mélange monomère à polymériser, notamment le mélange monomère d'éthylène et d'un diène conjugué. On dit alors que le système catalytique est formé *in situ* dans le milieu de polymérisation. Pour une copolymérisation en présence de solvant, l'activation du métallocène a lieu en présence du mélange monomère à polymériser et du solvant de polymérisation.

Un autre objet de l'invention est un procédé de préparation d'un copolymère qui comprend la copolymérisation d'un mélange de monomère d'éthylène et d'un diène conjugué en présence du système catalytique conforme à l'invention.

Le système catalytique conforme à l'invention peut être utilisé dans la copolymérisation d'un mélange de monomères d'éthylène et d'un diène conjugué, notamment 1,3-diène, de préférence le 1,3-butadiène, l'isoprène ou leur mélange, de manière plus préférentielle le 1,3-butadiène. La polymérisation est conduite de préférence en solution, en continu ou discontinu. Le solvant de polymérisation peut être un solvant hydrocarboné, aromatique ou aliphatique. A titre d'exemple de solvant de polymérisation, on peut citer le toluène, le méthylcyclohexane, le cyclohexane.

L'homme du métier ajuste les conditions de copolymérisation de manière à atteindre la microstructure et la macrostructure souhaitées du copolymère synthétisé. En particulier, il adapte les concentrations en chacun des réactifs (constituants du système catalytiques, monomères, stoppeur), selon le matériel (outils, réacteurs) utilisé pour conduire la copolymérisation. Comme cela est connu de l'homme du métier, la copolymérisation ainsi que la manipulation des monomères, du système catalytique et du ou des solvants de polymérisation se font dans des conditions anhydres et sous atmosphère inerte. La température de copolymérisation varie généralement dans un domaine allant de -20 à 120°C, préférentiellement de 50 à 90°C. La copolymérisation peut être conduite sous une pression, notamment variable, de préférence allant de 1 bar à 50 bars.

La copolymérisation peut être stoppée par ajout d'un composé portant un proton acide (stoppeur) ou par refroidissement du milieu de polymérisation. Le copolymère peut être récupéré selon les techniques classiques connues de l'homme du métier comme par exemple par précipitation, par évaporation du solvant sous pression réduite ou par stripping à la vapeur d'eau.

Le procédé conforme à l'invention permet l'obtention de copolymères de masses moléculaires moyennes, Mn, relativement élevées, notamment supérieures à 30000, plus particulièrement supérieure ou égale à 50 000, voire supérieure ou égale à 200 000. Par exemple des copolymères ayant une Mn d'au moins 50 000 (c'est-à-dire supérieure ou égale à 50 000) peuvent être obtenus avec un rapport molaire (co-catalyseur / métal Met) inférieur ou égal à 5; ceux ayant une Mn d'au moins 200 000 (c'est-à-dire supérieure ou égale à 200 000) avec un rapport molaire (co-catalyseur / métal Met) inférieur ou égal à 2 et sous une pression de polymérisation d'au moins 8 bars.

Les copolymères d'éthylène et de 1,3-butadiène susceptibles d'être obtenus par le procédé conforme à l'invention comportent des motifs 1,2-cyclohexanediyle et sont caractérisés par un taux molaire de motif 1,4-trans qui représente plus de 50% du 1,3-butadiène incorporé dans la chaîne copolymère. Autrement dit, plus de la moitié du 1,3-butadiène qui s'incorpore dans la chaîne copolymère s'incorpore sous la forme du motif 1,4-trans.

Le motif 1,2-cyclohexanediyle répond à la formule (II) suivante ; le motif vinyle à la formule - -CH₂-C(CH=CH₂)-, le motif 1,4 à la formule -CH₂-CH=CH-CH₂-. Le motif 1,4-trans est le motif 1,4 dans sa configuration trans.

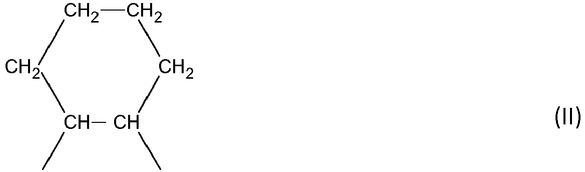

On appelle taux molaire d'incorporation du 1,3-butadiène dans la chaîne copolymère le ratio entre le nombre de moles de 1,3-butadiène inséré dans la chaîne copolymère sur la somme des moles de 1,3-butadiène et d'éthylène insérés dans la chaîne copolymère.

Les copolymères d'éthylène et de butadiène conformes à l'invention sont caractérisés par un taux molaire d'incorporation du 1,3-butadiène dans la chaîne copolymère allant de 11,5 à 35%, préférentiellement de 20 à 25%, sachant que 10 à 40%, de préférence 20 à 35% molaire du 1,3-butadiène incorporé sont sous la forme de motif vinyle et de motif 1,2-cyclohexanediyle.

De préférence, moins de 0.5% molaire du 1,3-butadiène incorporé sont sous la forme du motif 1,4-cis dans les copolymères d'éthylène et de 1,3-butadiène définis selon l'un quelconque des modes de réalisation de l'invention, le motif 1,4-cis étant le motif 1,4 dans sa configuration cis.

Avantageusement, les copolymères selon l'invention présentent par ailleurs un indice de polydispersité (Ip) qui est inférieur à 3,5 et, encore plus avantageusement, inférieur ou égal à 2,5.

Les copolymères selon l'invention présentent de préférence une température de transition vitreuse Tg qui est inférieure à -10° C. Plus précisément, ces copolymères peuvent par exemple présenter une température Tg comprise entre -20° C et -50° C. Cette température Tg est mesurée dans la présente description par la technique de calorimétrie différentielle à balayage « DSC » (Differential Scanning Calorimetry). Plus précisément, ces analyses thermiques ont été effectuées sur un Calorimètre « SETARAM 131 ». Les échantillons ont subi deux montées en température de -100° C à 100° C à la vitesse de 10° C/min. Les données de la seconde montée en température ont été utilisées pour déterminer les propriétés thermiques des polymères.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

Pour tous les exemples suivants, on a opéré sous argon et on a préalablement séché les solvants utilisés par réaction avec du sodium suivie d'une distillation, ou bien sur un tamis moléculaire de 3 Å sous balayage d'argon.

On a analysé l'ensemble des complexes métallocènes synthétisés ci-après par RMN 1H dans le THF-d8, la pyridine-d5 ou le dichlorométhane-d2 à la température de 22°C, en utilisant un spectromètre « BRUKER DRX 300 » à la fréquence de 300 MHz.

On a déterminé la microstructure de chaque copolymère obtenu dans ces exemples par les techniques de RMN¹H et de RMN¹³C (voir annexe 3).

### II-1) Synthèse du métallocène de formule A1 : [Me₂Si(2-Me-C₉H₅)(C₁₃H₈)NdCl]ₚ :

### II-1.a) Synthèse du composé Me₂Si(2-Me-C₉H₆)(C₁₃H₉) :

1,07 g de Me₂Si(C₁₃H₈)Cl (4,1 mmol) sont dissous dans 50 ml d'éther diéthylique. Cette solution est ajoutée à une suspension contenant 0,53 g de [2-Me-C₉H₆][Li] (4,1 mmol) dans 25 ml d'Et₂O. Le mélange est agité pendant 12 heures à température ambiante, puis 2 heures à reflux. La suspension est ensuite filtrée et le filtrat est évaporé. Le solide obtenu est lavé à froid avec deux fois 15 ml d'heptane, puis séché sous vide. 1,07 g de poudre beige sont ainsi récupérés. Rendement = 72%.
RMN 1H (dichlorométhane-d2, 22°C) : δ = -0,42 ppm (s, 3H, Si(CH₃)2), -0,44 ppm (s, 3H, Si(CH₃)2), 2,23 ppm (s, 3H, CH₃-C₉H₆), 3,76 ppm (s, 1H, Si-CH de (2-(CH₃)-C₉H₆)), 4,26 ppm (s, 1H, Si-CH de (C₁₃H₉)), 7,3 à 7,9 ppm (m, 13H, protons aromatiques de C₉H₆ et C₁₃H₈).

### II-1.b) Synthèse du composé Me₂Si(2-Me-C₉H₅)(C₁₃H₈)Li₂ :

1,0 g de Me₂Si(2-Me-C₉H₆)(C₁₃H₉) (2,8 mmol) sont dissous dans 50 ml d'éther diéthylique. La solution est refroidie à 0°C puis 3,5 ml de BuLi 1,6M sont coulés. Après retour à température ambiante, la suspension est agitée pendant 12 heures. Le solide est séparé de la solution par décantation puis séché sous vide. 0,6 g de poudre jaune sont ainsi isolés.
RMN 1H (THF-d8, 22°C) : δ = 0,80 ppm (s, 6H, Si(C**H**₃)2), 2,48 ppm (s, 3H, (C**H**₃)-C₉H₅), 5,85 ppm (s, 1H, (CH₃)-C₉**H**₅), 6,4 à 7,9 ppm (m, protons aromatiques de C₉H₅ et C₁₃H₈).

### II-1.c) Synthèse du métallocène de formule Al : [Me₂Si(2-Me-C₉H₅)(C₁₃H₈)NdCl]ₚ.

0,6 g de [Me₂Si(2-Me-C₉H₅)(C₁₃H₈)]Li₂ (0,8 mmol) sont dissous dans 20 ml de THF. Cette solution est coulée sur une solution contenant 0,31 g de NdCl₃(THF)₂ (0,8 mmol) puis le mélange est agité pendant 60 heures à température ambiante. Le solvant est évaporé, puis le résidu est repris au toluène. Après filtration, évaporation du filtrat et séchage sous vide, 0,7 g de poudre verte sont recueillis. Le métallocène est sous forme monomère (p égal à 1) ou dimère (p égal à 2).
Analyses élémentaires : %C = 56,35 et %H = 5,87 (théorie : %C = 55,20 et %H = 5,02).

### II-2) Synthèse du métallocène de formule A2 : [Me₂Si(C₅Me₄)(C₁₃H₈)NdCl]ₚ :

### II-2.a) Synthèse du composé Me₂Si(C₅Me₄H)(C₁₃H₉) :

1,1 g de Me₂Si(C₁₃H₉)Cl (4,2 mmol) sont dissous dans 20 ml de THF. La solution est refroidie à -78°C. Une suspension contenant 1 équivalent de (C₅Me₄HLi) dans 20 ml de THF est alors coulée. Après retour à température ambiante, le mélange est agité pendant 15 heures. Le solvant est évaporé puis le résidu est repris avec 50 ml d'heptane. Après filtration et élimination d'un sel, le filtrat est évaporé, conduisant à 1,1 g d'huile jaune. Rendement = 75%.
RMN 1H (dichlorométhane-d2) : δ = -0,36 ppm (s, 6H, Si(C**H**₃)₂), 1,80 ppm (s, 6H, C₅(C**H**₃)4H), 1,95 ppm (s, 6H, C₅(C**H**₃)₄H), 3,19 ppm (s, 1H, C₅Me₄**H**), 4,12 ppm (s, 1H, Si-CH de C₁₃H₈), 7,34 ppm (m, 4H, C**H** de C₁₃H₈), 7,56 ppm (d, JH-H = 7 Hz, 2H, Cb**H** de C₁₃H₈), 7,87 ppm (d, JH-H = 7 Hz, 2H, C**H** de C₁₃H₈).

### II-2.b) Synthèse du composé Me₂Si(C₅Me₄)(C₁₃H₈)Li₂(Et₂O) :

1,1 g de Me₂Si(C₅Me₄H)(C₁₃H₉) (3,2 mmol) sont dissous dans 30 ml d'éther diéthylique. La solution est refroidie à 0°C. 4 ml de BuLi 1,6M (6,4 mmol) sont coulés lentement sur cette solution. La suspension obtenue est agitée pendant 20 heures à température ambiante. Le solide est alors séparé de la solution par décantation, puis lavé à froid avec deux fois 10 ml d'Et2O. Après séchage sous vide, 1,15 g de poudre jaune sont récupérés. Rendement = 84%.
RMN 1H (pyridine-d5) : δ = 1,14 ppm (t, 6H, C**H**₃ de Et₂O), 1,35 ppm (s, 6H, Si(C**H**₃)₂), 2,29 ppm (s, 6H, C₅(C**H**₃)₄), 2,53 ppm (s, 6H, C₅(C**H**₃)₄), 3,38 ppm (q, 4H, C**H**₂ de Et₂O), 7,08 ppm (t, JH-H = 8 Hz, 2H, C**H** de C₁₃H₈), 7,34 ppm (t, JH-H = 8 Hz, 2H, C**H** de C₁₃H₈), 8,61 ppm (d, JH-H = 8 Hz, 2H, C**H** de C₁₃H₈), 8,74 ppm (d, JH-H = 8 Hz, 2H, C**H** de C₁₃H₈).

### II-2.c) Synthèse du métallocène de formule A2 : [Me₂Si(C₅Me₄)(C₁₃H₈)NdCl]ₚ

1,15 g de [Me₂Si(C₅Me₄)(C₁₃H₈)]Li₂(Et₂O) (2,7 mmol) sont dissous dans 20 ml de THF. Cette solution est coulée à température ambiante sur une solution contenant 1,06 g de NdCl₃(THF)₂ (2,7 mmol) dans 30 ml de THF. La solution rouge est agitée pendant 60 heures, puis le solvant est évaporé. Le résidu est alors repris au toluène. Après filtration, le toluène est évaporé conduisant à un résidu collant marron. Ce résidu est traité au toluène chaud (90°C), entraînant la précipitation d'une poudre vert vif qui est ensuite séchée sous vide. Le métallocène est sous forme monomère (p égal à 1) ou dimère (p égal à 2).
RMN 1H (pyridine-d5) à -10°C : δ = -5,70 ppm (br, 6H), 2,20 ppm (s, 2/3 toluène, C₆H₅-C**H**₃), 8,40 ppm (t, 2H, C₅(C**H**₃)₄), 9,90 ppm (br, 2H, C₅(C**H**₃)₄), 10,10 ppm (d, 2H, C₅(C**H**₃)₄), 10,40 ppm (br, 6H), 15,10 ppm (br, 6H), 15,60 ppm (br, 2H, C₅(C**H**₃)₄).
Analyses élémentaires : %C = 51,52 et %H = 5,47 (théorie pour [{Me₂Si(C₅Me₄)(C₁₃H₈)}NdCl] + 2 LiCl + 2/3 toluène : %C = 51,54 ; %H = 4,72)

### II-3) Synthèse du métallocène de formule A3 : [Me₂Si(2-Me-C₉H₅)₂NdCl]ₚ :

### II-3.a) Synthèse du composé Me₂Si(2-Me-C₉H₆)₂:

1,71 g de [2-Me-C₉H₆][Li] (12,5 mmol) sont dissous dans 100 ml de THF. Cette solution est refroidie à -20°C, puis 0,81 g de Me₂SiCl₂ (6,25 mmol) sont ajoutés à la pipette. Après retour à température ambiante le mélange est agité pendant 12 heures. La solution est ensuite chauffée à 60°C puis le solvant est évaporé sous vide. Le résidu est repris à l'heptane. Après filtration et élimination d'un sel, le filtrat est évaporé, ce qui conduit à 1,90 g de solide jaune. Rendement = 95%.

### II-3.b) Synthèse du composé Me₂Si(2-Me-C₉H₅)₂Li₂ :

1,90 g de Me₂Si(2-Me-C₉H₆)₂ (6 mmol) sont dissous dans 100 ml de toluène. La solution est refroidie à -20°C puis 8,2 ml de BuLi 1,6M (13,2 mmol) sont ajoutés à la pipette. Après retour à température ambiante le mélange est agité pendant 12 heures à température ambiante, puis 2 heures à 80°C. Le solide est séparé de sa solution puis lavé à froid avec deux fois 30 ml d'heptane. Après séchage sous vide, 1,97 g de poudre jaune sont obtenus. Rendement = 100%.
RMN 1H (THF-d8, 22°C) : 0,70 ppm (s, 6H, Si(C**H**₃)2), 2,45 ppm (s, 6H, (2-(C**H**₃)-C₉H₅)), 5,85 ppm (s, 2H, C**H** de C₉H₅), 6,40 ppm (m, 4H, C**H** de C₉H₅), 7,17 ppm (m, 2H, C**H** de C₉H₅), 7,63 ppm (m, 2H, C**H** de C₉H₅).

### II-3.c) Synthèse du métallocène de formule A3 [Me₂Si(2-Me-C₉H₅)₂NdCl]ₚ

Une solution contenant 0,30 g de NdCl₃ (1,2 mmol) dans 35 ml de THF est portée au reflux pendant une nuit. Puis, 0,39 g de [Me₂Si(2-Me-C₉H₅)₂]Li₂ (1,2 mmol) sont dissous dans 35 ml de THF et ajoutés à température ambiante sur la solution précédente. Le mélange est alors chauffé à 60°C puis maintenu à cette température pendant 12 heures. Le solvant est évaporé et le produit extrait avec du toluène. Après filtration, évaporation sous vide du solvant et séchage, 0,58 g de solide vert sont isolés. Le métallocène est sous forme monomère (p égal à 1) ou dimère (p égal à 2).

### II-4) Synthèse d'un métallocène B « témoin » de l'état de la technique [Me₂Si(C₁₃H₈)₂]NdCl :

On a coulé à température ambiante 1090 mg (2,8mmol) de Me₂SiFlu₂Li₂, dissous dans 50 ml de THF, sur une solution contenant 620 mg (2,5 mmol) de NdCl₃ dans 100 ml de THF (la suspension de NdCl₃ a été préalablement chauffée à reflux pendant 12 heures). On a porté le mélange au reflux pendant 12 heures, puis on a évaporé le solvant. On a extrait le produit au toluène et l'on a éliminé un sel par filtration. On a obtenu 1390 mg (2,4 mmol) de complexe brut après évaporation du filtrat, le chloro (µ-diméthylsilyl)bis(η⁵-fluorényl) néodyme de formule [Me₂SiFlu₂]NdCl et de masse molaire M = 566,27 g/mol.

### II-5) Essais de copolymérisation à basse pression (pression initiale = 4 bars):

On utilise chacun des métallocènes A1, A2, A3 et B en association avec du butyloctyl magnésium (« BOMAG » en abrégé) à titre de co-catalyseur d'alkylation, pour la copolymérisation de l'éthylène et du butadiène. On prépare les systèmes catalytiques en procédant à une activation préalable du métallocène par le co-catalyseur « BOMAG », selon un rapport molaire (co-catalyseur Mg / complexe Nd) étant égal à 5, la durée d'activation étant de 15 minutes.
Les polymérisations se déroulent dans un réacteur en verre de 250 ml, dans 200 ml de toluène à une température de 80° C et à une pression initiale de 4 bars. On introduit les monomères dans le milieu sous la forme de mélanges gazeux à 10 % molaire et 20 % molaire de butadiène. Après un temps t (min.) de réaction, la copolymérisation est stoppée par refroidissement et dégazage du réacteur, puis le copolymère est obtenu par précipitation dans du méthanol. Après séchage, on obtient une masse m (g) de copolymère.

Les résultats des différents essais sont reportés dans les tableaux I à III. Les valeurs exprimées en Kg.mol⁻¹.h⁻¹ indiquent le nombre de grammes de copolymère obtenu par mole de métalllocène et par heure, constituant ainsi des indicateurs de l'activité catalytique. Les masses molaires moyennes en nombre et la polydispersité sont déterminées selon la méthode décrite dans l'annexe 1. La microstructure des copolymères, déterminée selon la méthode décrite dans l'annexe 2, figure dans les tableaux IV et V.

**Tableau I : Conditions de copolymérisation à 10% molaire**

| Essais | Métallocène | Masse de métallocène en mg | [Nd] µmol.L⁻¹ | [Mg] /[Nd] | Masse copolymère en g | Durée en min. |
|---|---|---|---|---|---|---|
| EX1 | A1 | 20,8 | 198 | 5 | 6,3 | 60 |
| EX2 | A2 | 19 | 182 | 5 | 9,5 | 60 |
| EX3 | A3 | na | na | na | na | na |
| C-EX1 | B (témoin) | 35 | 183 | 20 | 5,8 | 90 |

**Tableau II : Conditions de copolymérisation à 20% molaire**

| Essais | Métallocène | Masse de métallocène en mg | [Nd] µmol.L⁻¹ | [Mg] /[Nd] | Masse copolymère en g | Durée en min. |
|---|---|---|---|---|---|---|
| EX4 | A1 | 22,6 | 218 | 5 | 5,4 | 60 |
| EX5 | A2 | 21 | 201 | 5 | 7,1 | 60 |
| EX6 | A3 | 21,4 | 195 | 5 | 5,2 | 60 |
| C-EX2 | B (témoin) | 35 | 183 | 20 | 13,2 | 180 |

**Tableau III : Activités des métallocènes et macrostructure des copolymères**

| **Essais** | %mol de Butadiene Alimentation | Activité en kg.mol⁻¹.h⁻¹ | Mn en g.mol⁻¹ | Ip |
|---|---|---|---|---|
| **EX1** | 10 | 161 | 18 600° | 2,10 |
| **EX2** | 10 | 203 | 15 200 | 1,80 |
| **EX3** | 10 | na | na | na |
| **EX4** | 20 | 127 | 11 900 | 1,60 |
| **EX5** | 20 | 132 | 12 750 | 1,60 |
| **EX6** | 20 | 122 | 6 400 | 1,80 |
| **C-EX1(témoin)** | 10 | 90 | 4 500 | 1,60 |
| **C-EX2** | 20 | 70 | 7 800 | 1,50 |

**Tableau IV : Caractérisation par RMN ¹³C de la microstructure des copolymères**

| **Essais** | % molaire unités butadiène | % molaire motifs 1,4-trans | % molaire motifs 1,2 | % molaire motifs 1,2-cyclohexanediyle |
|---|---|---|---|---|
| **EX1** | 12,1 | 66,3 | 12 | 21,7 |
| **EX2** | 11,7 | 68,2 | 12,2 | 19,6 |
| **EX3** | na | na | na | na |
| **EX4** | 34,6 | 69,7 | 20,7 | 9,6 |
| **EX5** | 28,2 | 67 | 21,3 | 11,7 |
| **EX6** | 28,4 | 85,9 | 7,2 | 6,9 |
| **C-EX1** | 6,0 | 21,5 | 21,2 | 57,2 |
| **C-EX2** | 11,0 | 24,6 | 21,8 | 53,5 |

**Tableau V : Caractérisation par RMN ¹³C de la microstructure des copolymères**

| **Essais** | % molaire unités butadiène | % molaire motifs 1,2 et 1,2-cyclohexanediyle |
|---|---|---|
| **EX1** | 12,1 | 33,7 |
| **EX2** | 11,7 | 31,8 |
| **EX3** | na* | na* |
| **EX4** | 34,6 | 30,3 |
| **EX5** | 28,2 | 33,0 |
| **EX6** | 28,4 | 14,1 |
| **C-EX1** | 6,0 | 78,4 |
| **C-EX2** | 11,0 | 75,3 |

| | | |
|---|---|---|
| na : non analysé | | |

### ANNEXE1:

### Analyse par Chromatographie d'Exclusion Stérique des copolymères :

a) Pour les copolymères solubles à température ambiante dans le tétrahydrofuranne (THF), on a déterminé les masses molaires par chromatographie d'exclusion stérique dans le THF. On a injecté les échantillons à l'aide d'un injecteur « Waters 717 » et d'une pompe « Waters 515 HPLC » à un débit de 1 ml.min⁻¹ dans une série de colonnes « Polymer Laboratories ».

Cette série de colonnes, placée dans une enceinte thermostatée à 45° C, est composée de :
- 1 précolonne PL Gel 5 µm,
- 2 colonnes PL Gel 5 µm Mixte C,
- 1 colonne PL Gel 5 µm-500 Å.

On a réalisé la détection à l'aide d'un réfractomètre « Waters 410 ».

On a déterminé les masses molaires par calibration relative en utilisant des étalons de polystyrène certifiés par « Polymer Laboratories ».

Sans être une méthode absolue, la SEC permet d'appréhender la distribution des masses moléculaires d'un polymère. A partir de produits étalons commerciaux, les différentes masses molaires moyennes en nombre (Mn) et en poids (Mw) peuvent être déterminés et la polydispersité calculée (Ip = Mw/Mn).
b) Pour les copolymères insolubles à température ambiante dans le tétrahydrofuranne, les masses molaires ont été déterminées dans le 1,2,4-trichlorobenzène. On les a tout d'abord dissous à chaud (4 h 00 à 150° C), puis on les a injectés à 150° C avec un débit de 1 ml.min⁻¹ dans un chromatographe « Waters Alliance GPCV 2000 » équipé de trois colonnes « Styragel » (2 colonnes « HT6E » et 1 colonne « HT2 »).

On a effectué la détection à l'aide d'un réfractomètre « Waters ».

On a déterminé les masses molaires moyennes en nombre, ainsi que l'Ip par calibration relative en utilisant des étalons polystyrène certifiés par « Polymer Laboratories ».

### ANNEXE 2

### Détermination par RMN ¹H et ¹³C de la microstructure des unités butadiène insérées dans les copolymères d'éthylène et de butadiène.

L'analyse spectroscopique RMN haute résolution a été réalisée avec un spectromètre de dénomination Bruker DRX 400 à des fréquences de 400 MHz pour l'observation du ¹H et 100.6 MHz pour l'observation du ¹³C. Les spectres 1D ont été obtenus avec une sonde 5-mm QNP à la température 363K. Pour les spectres 2D, une sonde large bande avec un gradient de champ suivant l'axe z a été utilisée. Les corrélations ¹H-¹H ont été déterminées avec une séquence COSY-GS et les corrélations ¹H-¹³C avec les séquences HMQC-GS et HMBC-GS. Un mélange de tétrachloroéthylène (TCE) et perdeutérobenzene (C₆D₆) (rapport 2/1 en volume) a été utilisé comme solvant. Les concentrations de polymère pour l'analyse sont comprises entre 10 et 15% (w/w). Les déplacements chimiques (δ) sont donnés en ppm en prenant comme référence interne le tétraméthylsilane (TMS) ; en l'absence de TMS la résonance du polyéthylène ("PE" à δ= 30.06 ppm) est utilisée en tant que référence interne.

### NOTATIONS

Dans l'ensemble des schémas et des tableaux de cette annexe, les symboles suivants ont été utilisés :
- T :: unité butadiène ou isoprène insérée en 1,4-*trans,*
- C :: unité butadiène ou isoprène insérée en 1,4*-cis,*
- L :: unité butadiène insérée en 1,4*-cis* ou *trans,*
- V :: unité butadiène insérée en 1,2 (vinyle),
- E :: unité éthylène,
- B :: unité butadiène (sans distinction de microstructure),
- Cy-1,2-T :: motif 1,2-*trans*-cyclohexane,
- Cy-1,2-C :: motif 1,2-*cis*-cyclohexane,
- Cy-1,4 :: motif 1,4-cyclohexane.

En ce qui concerne l'attribution des signaux découlant des unités butadiène 1,2 (V) et 1,4-trans (T) et des unités 1,2-*trans*-cyclohexane (Cy-1,2-T), il faudra se reporter à l'article « Investigation of Ethylene/Butadiene Copolymers Microstructure by 1 H and 13 C NMR » : M.F. Llauro, C. Monnet, F. Barbotin, V. Monteil, R. Spitz, C. Boisson, Macromolecules 2001, 34, 6304.

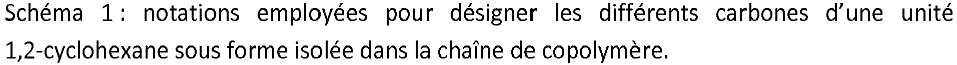

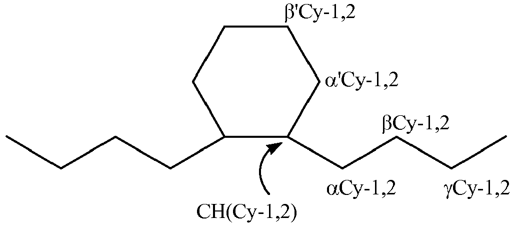

**Tableau 1 : déplacements chimiques des carbones relatifs aux motifs 1,2-trans-cyclohexane**

| **Type de carbone** | **δ (ppm)** |
|---|---|
| αCy-1,2-T | 33,96 |
| βCy-1,2-T | 27,00 |
| γCy-1,2-T | 30,59 |
| α'Cy-1,2-T | 32,26 |
| β'Cy-1,2-T | 26,66 |
| (CH)Cy-1,2-T | 42,01 |

**Tableau 2 : déplacements chimiques des carbones relatifs aux motifs 1,2-cis-cyclohexane**

| **Type de carbone** | **δ (ppm)** |
|---|---|
| αCy-1,2-C | 28,14 |
| βCy-1,2-C | 29,25 |
| γCy-1,2-C | |
| α'Cy-1,2-C | 30,50 |
| β'Cy-1,2-C | 24,22 |
| (CH)Cy-1,2-C | 39,67 |

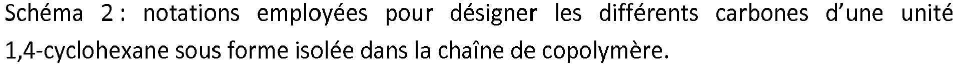

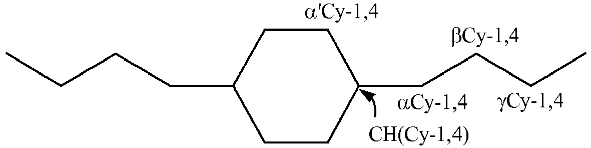

**Tableau 3 : déplacements chimiques des carbones relatifs aux motifs 1,4-cyclohexane**

| **Type de carbone** | **δ (ppm)** |
|---|---|
| αCy-1,4 | 37,90 |
| βcy-1,4 | 27,30 |
| γCy-1,4 | 30.40 |
| α'Cy-1,4 | 33,90 |
| (CH)Cy-1,4 | 38,40 |

## Revendications

1. Système catalytique à base au moins :
• d'un métallocène de formule (I)
• d'un composé organométallique à titre de co-catalyseur choisi dans le groupe constitué par les alkyl magnésiums, les alkyl lithiums, les réactifs de Grignard et les mélanges d'alkyl lithiums et d'alkyl aluminiums,
[{P(Cp¹)(Cp²)MetG(L)ₓ}ₚ] (I)
- Met étant un atome de terre rare,
- le symbole G représentant un atome d'halogène choisi parmi par le chlore, l'iode et le brome, ou un ligand monovalent choisi parmi le groupe borohydrure BH₄, les groupes amidures, les groupes alkyles et les groupes silylalkyles,
- L représentant une molécule d'un solvant complexant,
- x, nombre entier ou non, étant supérieur ou égal à 0
- p, nombre entier, étant égal à 1 ou 2,
- Cp¹ et Cp², identiques ou différents, étant choisis dans le groupe constitué par les groupes cyclopentadiényles substitués au moins en position 2 et 5, les groupes fluorényles substitués, le groupe fluorényle non substitué et les groupes indényles substitués au moins en position 2,
- les substituants en position 2 et 5 des groupes cyclopentadiényles et le substituant en position 2 des groupes indényles étant alkyles ou aryles,
- P étant un groupe pontant Cp¹ et Cp², et répondant à la formule MR¹R², avec M représentant un atome de Si ou de C, et avec R¹ et R², identiques ou différents, représentant un groupe alkyle,
- à la condition que si Cp¹ est un groupe fluorényle non substitué, Cp² est différent d'un groupe fluorényle non substitué, de préférence différent d'un groupe fluorényle non substitué et d'un groupe fluorényle substitué.

2. Système catalytique selon la revendication 1 dans lequel les alkyles et aryles, substituants en position 2 et 5 des groupes cyclopentadiényles et substituants en position 2 des groupes indényles, contiennent respectivement 1 à 6 atomes de carbone et 6 à 12 atomes de carbone, de préférence sont méthyle et phényle respectivement.

3. Système catalytique selon l'une quelconque des revendications 1 à 2 dans lequel le groupe cyclopentadiényle substitué au moins en position 2 et 5 est le 2,3,4,5-tétraméthylcyclopentadiényle.

4. Système catalytique selon l'une quelconque des revendications 1 à 3 dans lequel le groupe indényle substitué au moins en position 2 est le 2-méthylindényle ou le 2-phénylindényle.

5. Système catalytique selon l'une quelconque des revendications 1 à 4 dans lequel G représente l'atome de chlore ou le groupe borohydrure.

6. Système catalytique selon l'une quelconque des revendications 1 à 5 dans lequel P représente le groupe SiMe₂ ou CMe₂.

7. Système catalytique selon l'une quelconque des revendications 1 à 6 dans lequel Met est un atome de lanthanide Ln dont le numéro atomique va de 57 à 71, de préférence un atome de néodyme.

8. Système catalytique selon l'une quelconque des revendications 1 à 7 dans lequel Cp¹ représente un groupe indényle substitué au moins en position 2.

9. Système catalytique selon l'une quelconque des revendications 1 à 8 dans lequel Cp¹ représente un groupe cyclopentadiényle substitué au moins en position 2 et 5, de préférence par un méthyle.

10. Système catalytique selon l'une quelconque des revendications 8 à 9 dans lequel Cp² représente un groupe fluorényle substitué ou non substitué, de préférence non substitué.

11. Système catalytique selon l'une quelconque des revendications 1 à 7 dans lequel Cp¹ et Cp², identiques ou différents, représentent chacun un groupe indényle substitué au moins en position 2, de préférence par un méthyle ou un phényle, de manière plus préférentielle par un méthyle.

12. Système catalytique selon l'une quelconque des revendications 1 à 11 dans lequel le co-catalyseur est un alkyl magnésium, de préférence le butyloctylmagnésium.

13. Procédé de préparation d'un copolymère d'éthylène et d'un diène conjugué qui comprend la copolymérisation d'un mélange de monomères d'éthylène et d'un diène conjugué, **caractérisé en ce que** la copolymérisation a lieu en présence du système catalytique défini à l'une quelconque des revendications 1 à 12.

14. Procédé selon la revendication 13 dans lequel le diène conjugué est le 1,3-butadiène.

15. Copolymère d'éthylène et de 1,3-butadiène comportant des motifs 1,2-cyclohexanediyle et des motifs 1,4-trans susceptible d'être obtenu par le procédé selon la revendication 14, **caractérisé en ce que** :
- le taux molaire de motif 1,4-trans représente plus de 50% du 1,3-butadiène incorporé dans la chaîne copolymère,
- le taux molaire d'incorporation du 1,3-butadiène dans la chaîne copolymère va de 11,5 à 35%, sachant que 10 à 40%, de préférence 20 à 35% molaire du 1,3-butadiène incorporé sont sous la forme de motif vinyle et de motif 1,2-cyclohexanediyle,
le motif 1,4-trans étant le motif 1,4 de formule -CH₂-CH=CH-CH₂- dans sa configuration trans ; le motif 1,2-cyclohexanediyle étant de formule (II).

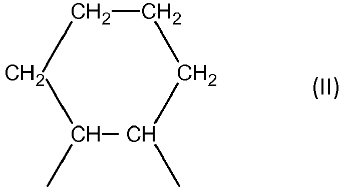

## Patentansprüche

1. Katalytisches System auf Basis von mindestens:
• einem Metallocen der Formel (I),
• einer metallorganischen Verbindung als Cokatalysator aus der Gruppe bestehend aus Alkylmagnesiumverbindungen, Alkyllithiumverbindungen, Grignard-Reagenzien und Mischungen von Alkyllithiumverbindungen und Alkylaluminiumverbindungen,
[{P(Cp¹)(Cp²)MetG(L)ₓ}ₚ] (I)
- wobei Met für ein Seltenerdmetallatom steht,
- wobei das Symbol G für ein Halogenatom, das aus Chlor, Iod und Brom ausgewählt ist, oder einen einwertigen Liganden, der aus der Borhydridgruppe BH₄, Amidgruppen, Alkylgruppen und Silylalkylgruppen ausgewählt ist, steht,
- wobei L für ein Molekül eines komplexierenden Lösungsmittels steht,
- wobei x ganzzahlig oder nicht ganzzahlig ist und größer oder gleich 0 ist,
- p ganzzahlig ist und gleich 1 oder 2 ist,
- Cp¹ und Cp² gleich oder verschieden sind und aus der Gruppe bestehend aus Cyclopentadienylgruppen, die mindestens in Position 2 und 5 substituiert sind, substituierten Fluorenylgruppen, der unsubstituierten Fluorenylgruppe und Indenylgruppen, die mindestens in Position 2 substituiert sind, ausgewählt sind,
- wobei es sich bei dem Substituenten in Position 2 und 5 der Cyclopentadienylgruppen und dem Substituenten in Position 2 der Indenylgruppen um Alkylgruppen oder Arylgruppen handelt,
- wobei P eine Gruppe, die Cp¹ und Cp² verbrückt, ist und der Formel MR¹R² entspricht, wobei M für ein Si- oder C-Atom steht und wobei R¹ und R² gleich oder verschieden sind und für eine Alkylgruppe stehen,
- mit der Maßgabe, dass dann, wenn Cp¹ eine unsubstituierte Fluorenylgruppe ist, Cp² von einer unsubstituierten Fluorenylgruppe verschieden ist und vorzugsweise von einer unsubstituierten Fluorenylgruppe und einer substituierten Fluorenylgruppe verschieden ist.

2. Katalytisches System nach Anspruch 1, wobei die Alkyl- und Arylgruppen, die Substituenten in Position 2 und 5 der Cyclopentadienylgruppen und Substituenten in Position 2 der Indenylgruppen sind, 1 bis 6 Kohlenstoffatome bzw. 6 bis 12 Kohlenstoffatome enthalten und vorzugsweise Methyl bzw. phenyl sind.

3. Katalytisches System nach einem der Ansprüche 1 bis 2, wobei es sich bei der Cyclopentadienylgruppe, die mindestens in Position 2 und 5 substituiert ist, um 2,3,4,5-Tetramethylcyclopentadienyl handelt.

4. Katalytisches System nach einem der Ansprüche 1 bis 3, wobei es sich bei der Indenylgruppe, die mindestens in Position 2 substituiert ist, um 2-Methylindenyl oder 2-Phenylindenyl handelt.

5. Katalytisches System nach einem der Ansprüche 1 bis 4, wobei G für das Chloratom oder die Borhydridgruppe steht.

6. Katalytisches System nach einem der Ansprüche 1 bis 5, wobei P für die SiMe₂- oder CMe₂-Gruppe steht.

7. Katalytisches System nach einem der Ansprüche 1 bis 6, wobei Met für ein Lanthanidatom Ln mit einer Ordnungszahl von 57 bis 71, vorzugsweise eine Neodymatom, steht.

8. Katalytisches System nach einem der Ansprüche 1 bis 7, wobei Cp¹ für eine Indenylgruppe, die mindestens in Position 2 substituiert ist, steht.

9. Katalytisches System nach einem der Ansprüche 1 bis 8, wobei Cp¹ für eine Cyclopentadienylgruppe, die mindestens in Position 2 und 5 substituiert ist, vorzugsweise durch ein Methyl, steht.

10. Katalytisches System nach einem der Ansprüche 8 bis 9, wobei Cp² für eine substituierte oder unsubstituierte und vorzugsweise unsubstituierte Fluorenylgruppe steht.

11. Katalytisches System nach einem der Ansprüche 1 bis 7, wobei Cp¹ und Cp² gleich oder verschieden sind und jeweils für eine Indenylgruppe, die mindestens in Position 2 substituiert ist, vorzugsweise durch ein Methyl oder ein Phenyl, weiter bevorzugt durch ein Methyl, stehen.

12. Katalytisches System nach einem der Ansprüche 1 bis 11, wobei es sich bei dem Cokatalysator um ein Alkylmagnesium, vorzugsweise Butyloctylmagnesium, handelt.

13. Verfahren zur Herstellung eines Copolymers von Ethylen und einem konjugierten Dien, umfassend die Copolymerisation einer Mischung von Ethylen- und konjugierten Dien-Monomeren, **dadurch gekennzeichnet, dass** die Copolymerisation in Gegenwart des katalytischen Systems gemäß einem der Ansprüche 1 bis 12 stattfindet.

14. Verfahren nach Anspruch 13, wobei es sich bei dem konjugierten Dien um 1,3-Butadien handelt.

15. Copolymer von Ethylen und 1,3-Butadien mit 1,2-Cyclohexandiyl-Einheiten und trans-1,4-Einheiten, das durch das Verfahren nach Anspruch 14 erhältlich ist, **dadurch gekennzeichnet, dass**:
- der molare Gehalt an trans-1,4-Einheiten mehr als 50 % des in die Copolymerkette eingebauten 1,3-Butadiens ausmacht,
- der molare Einbaugrad von 1,3-Butadien in die Copolymerkette im Bereich von 11,5 bis 35 Mol-% liegt, wobei 10 bis 40 Mol-% und vorzugsweise 20 bis 35 Mol-% des eingebauten 1,3-Butadiens in Form von Vinyleinheiten und 1,2-Cyclohexandiyl-Einheiten vorliegen,
wobei es sich bei der trans-1,4-Einheit um die 1,4-Einheit der Formel -CH₂-CH=CH-CH₂- in ihrer trans-Konfiguration handelt und die 1,2-Cyclohexandiyl-Einheit die Formel (II) aufweist.

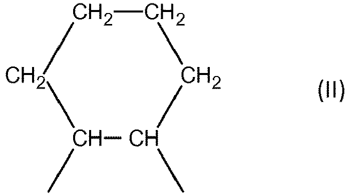

## Claims

1. Catalytic system based at least:
• on a metallocene of formula (I)
• on an organometallic compound as cocatalyst selected from the group consisting of alkylmagnesium compounds, alkyllithium compounds, Grignard reagents and mixtures of alkyllithium compounds and alkylaluminium compounds,
[{P(Cp¹)(Cp²)MetG(L)ₓ}ₚ] (I)
- Met being a rare earth metal atom,
- the symbol G representing a halogen atom chosen from chlorine, iodine and bromine, or a monovalent ligand chosen from the borohydride BH₄ group, amide groups, alkyl groups and silylalkyl groups,
- L representing a molecule of a complexing solvent,
- x, which is or is not an integer, being greater than or equal to 0,
- p, which is an integer, being equal to 1 or 2,
- Cp¹ and Cp², which are identical or different, being selected from the group consisting of cyclopentadienyl groups substituted at least in the 2 and 5 positions, substituted fluorenyl groups, the unsubstituted fluorenyl group and indenyl groups substituted at least in the 2 position,
- the substituents in the 2 and 5 positions of the cyclopentadienyl groups and the substituent in the 2 position of the indenyl groups being alkyls or aryls,
- P being a group which bridges Cp¹ and Cp² and which corresponds to the formula MR¹R², with M representing a Si or C atom and with R¹ and R², which are identical or different, representing an alkyl group,
- with the condition that, if Cp¹ is an unsubstituted fluorenyl group, Cp² is other than an unsubstituted fluorenyl group, preferably other than an unsubstituted fluorenyl group and than a substituted fluorenyl group.

2. Catalytic system according to Claim 1, in which the alkyls and aryls, which are substituents in the 2 and 5 positions of the cyclopentadienyl groups and substituents in the 2 position of the indenyl groups, respectively contain from 1 to 6 carbon atoms and from 6 to 12 carbon atoms, preferably are methyl and phenyl respectively.

3. Catalytic system according to either one of Claims 1 and 2, in which the cyclopentadienyl group substituted at least in the 2 and 5 positions is 2,3,4,5-tetramethylcyclopentadienyl.

4. Catalytic system according to any one of Claims 1 to 3, in which the indenyl group substituted at least in the 2 position is 2-methylindenyl or 2-phenylindenyl.

5. Catalytic system according to any one of Claims 1 to 4 in which G represents the chlorine atom or the borohydride group.

6. Catalytic system according to any one of Claims 1 to 5, in which P represents the SiMe₂ or CMe₂ group.

7. Catalytic system according to any one of Claims 1 to 6, in which Met is a lanthanide atom Ln, the atomic number of which ranges from 57 to 71, preferably a neodymium atom.

8. Catalytic system according to any one of Claims 1 to 7, in which Cp¹ represents an indenyl group substituted at least in the 2 position.

9. Catalytic system according to any one of Claims 1 to 8, in which Cp¹ represents a cyclopentadienyl group substituted at least in the 2 and 5 positions, preferably by a methyl.

10. Catalytic system according to either one of Claims 8 and 9, in which Cp² represents a substituted or unsubstituted fluorenyl group, preferably an unsubstituted fluorenyl group.

11. Catalytic system according to any one of Claims 1 to 7, in which Cp¹ and Cp², which are identical or different, each represent an indenyl group substituted at least in the 2 position, preferably by a methyl or a phenyl, more preferably by a methyl.

12. Catalytic system according to any one of Claims 1 to 11, in which the cocatalyst is an alkylmagnesium compound, preferably butyloctylmagnesium.

13. Process for the preparation of a copolymer of ethylene and of a conjugated diene, which comprises the copolymerization of a mixture of monomers of ethylene and of a conjugated diene, **characterized in that** the copolymerization takes place in the presence of the catalytic system defined in any one of Claims 1 to 12.

14. Process according to Claim 13, in which the conjugated diene is 1,3-butadiene.

15. Copolymer of ethylene and 1,3-butadiene comprising 1,2-cyclohexanediyl units and trans-1,4 units capable of being obtained by the process according to Claim 14, **characterized in that**:
- the molar content of trans-1,4 units represents more than 50% of the 1,3-butadiene incorporated in the copolymer chain,
- the molar degree of incorporation of the 1,3-butadiene into the copolymer chain ranges from 11.5 mol% to 35 mol%, it being known that from 10 mol% to 40 mol%, preferably from 20 mol% to 35 mol%, of the 1,3-butadiene incorporated is in the form of vinyl units and of 1,2-cyclohexanediyl units,
the trans-1,4 unit being the 1,4 unit of formula -CH₂-CH=CH-CH₂- in its trans configuration; the 1,2-cyclohexanediyl unit being of formula (II).
